# EUROPEAN PATENT SPECIFICATION

(11) **EP 2 901 661 B1**
(45) Date of publication and mention of the grant of the patent: **30.05.2018**
(21) Application number: 13842554.1
(22) Date of filing: 24.09.2013
(51) Int. Cl.: H04L 29/08, G06F 17/24

(54) **TERMINAL AND METHOD FOR TRANSMITTING AND RECEIVING DATA**
TERMINAL UND VERFAHREN ZUM SENDEN UND EMPFANGEN VON DATEN
TERMINAL ET PROCÉDÉ DE TRANSMISSION ET DE RÉCEPTION DE DONNÉES

(30) Priority: 25.09.2012 CN 201210359078
(43) Date of publication of application: 05.08.2015
(73) Proprietor: Tencent Technology (Shenzhen) Company Limited, Guangdong 518044 (CN)
(72) Inventor: MAO, Xiaobo, Shenzhen Guangdong 518044 (CN); CHEN, Bosong, Shenzhen Guangdong 518044 (CN); SONG, Bo, Shenzhen Guangdong 518044 (CN); JIANG, Shining, Shenzhen Guangdong 518044 (CN); LI, Na, Shenzhen Guangdong 518044 (CN); WANG, Can, Shenzhen Guangdong 518044 (CN); CHEN, Yingzhong, Shenzhen Guangdong 518044 (CN); ZHANG, Zengming, Shenzhen Guangdong 518044 (CN)
(74) Representative: Eisenführ Speiser
(86) International application number: PCT/CN2013/084130
(87) International publication number: WO 2014/048308

(56) References cited:
- WO-A1-2010/089458
- CA-A1- 2 769 646
- CN-A- 101 321 312
- CN-A- 102 368 764
- CN-A- 102 882 963
- US-A1- 2005 004 986
- US-A1- 2006 190 535
- US-A1- 2008 282 180
- US-A1- 2009 144 368
- US-A1- 2010 164 685

## Description

### Cross Reference to Related Application

This application claims the priority benefit of Chinese Patent Application No. 201210359078.3, filed September 25, 2012.

### Field

The present disclosure relates to transmitting data from one device to one or more other devices, and more particularly, to copying/cutting data from one device and pasting the copied/cut data on one or more other devices.

### Background

As the popularity and varieties of electronic devices continue to grow, it is not unusual for a person to have multiple devices at his disposal. For example, a person may have a personal computer (PC) and a tablet PC at home, a laptop for work, and a smartphone as his mobile device. With all these devices, there is often a need to transfer data, such as images and text, from one device to another device. For example, the person may have taken and stored a picture on his smartphone but would like to incorporate a copy of the picture onto his website being edited on his PC. As another example, the person may want to include an excerpt from a document displayed on his PC in a text message being typed on his smartphone. Currently, to achieve these types of data sharing among multiple devices, e.g., to move data from one application running on a first device to another application (or the same application) running on a second device, the person may have to open up a communication application, such as an e-mail or instant messaging application, on the first device, attach the picture or text to an e-mail or instant message, send the e-mail or message over a network, open the email or text message using an application on the receiving device, select a desired place on a user interface of the receiving device, and copy and paste the picture or text from the e-mail or text message into the selected place. Given the number of steps required to achieve this relatively straight forward task, the user may find the process to be unnecessarily tedious and complicated.

On the other hand, simple intuitive ways of moving data from one application interface to another application interface on the same device have been available and adapted by many users for a long time. For example, copy-and-paste is one of the most basic and frequently used functions in many existing applications on many platforms. As referred hereinafter, a copy operation can also be used to refer to a cut operation. For example, copy-and-paste can also include cut-and-paste. Typically, the copy/cut operation can be performed by the user selecting the data to be copied or cut by, for example, highlighting the data on a screen, and then selecting the copy or cut option from a menu or by simply pressing a short-key combination (e.g., Ctrl-C or Ctrl-X in MS Word) on a keyboard. The paste operation can be performed by the user picking a location on the screen by, for example, moving the cursor to that location, and then selecting the paste option from a menu or by using a corresponding short-key combination (e.g., Ctrl-V). On some devices, the same copy-and-paste operation can be performed using gestures. In some applications, the copied (or cut) data can be stored on a clipboard to be pasted at a later time. The clipboard can either be associated with one application or shared by multiple applications.

As described above, copying (or cutting) and pasting data on a single device can be done quickly and almost mindlessly by anyone having some familiarity with modern computers and other electronic devices. However, there is no comparable inter-device copy-and-paste mechanism currently available for copying (or cutting) data from one device and pasting the copied/cut data onto another device.

US 2009/144368 A1 discloses a clipboard for application sharing between a host computer and one or more viewer computers. WO 2010/089458 A1 discloses a system for exchanging NFC clipboard data via NFC-compliant wireless data transfer. CA 2 769 646 A1 discloses a method for a single mobile device for managing various types of information from multiple different sources. US 2008/282180 A1 discloses data transfer using a network clipboard.

### Summary

The disclosed terminal and method can provide quick and intuitive ways for moving data among multiple devices.

A source terminal connected to at least one other terminal according to claim 1 is disclosed.

In addition, a method performed by a source terminal according to claim 13 is disclosed.

### Brief Description of the Drawings

Fig. 1 is a block diagram illustrating an exemplary system for transferring data from one device to one or more other devices, according to embodiments of the disclosure.
Fig. 2 is a flow chart illustrating exemplary steps performed on a source terminal as a part of an inter-device copy-and-paste operation, according to embodiments of the disclosure.
Fig. 3 is a flow chart illustrating exemplary steps performed on a server as a part of an inter-device copy-and-paste operation, according to embodiments of the disclosure.
Fig. 4 is a flow chart illustrating exemplary steps performed on a target terminal as a part of an inter-device copy-and-paste operation, according to embodiments of the disclosure.
Fig. 5a illustrates exemplary modules on a source terminal for performing the copy/cut portion of an inter-device copy-and-paste operation, according to embodiments of the disclosure.
Fig. 5b illustrates exemplary modules of a target terminal for performing the paste portion of an inter-device copy-and-paste operation, according to embodiments of the disclosure.
Fig. 5c illustrates exemplary modules of a server for facilitating an inter-device copy-and-paste operation, according to embodiments of the disclosure.
Fig. 6 illustrates exemplary components of a computing system such as the source or target terminals described in the embodiments of the disclosure.

### Detailed Description

In the following description of preferred embodiments, reference is made to the accompanying drawings which form a part hereof, and in which it is shown by way of illustration specific embodiments in which the disclosure can be practiced. It is to be understood that other embodiments can be used and structural changes can be made without departing from the scope of the embodiments of this disclosure.

This disclosure generally relates to systems and methods for transmitting data among multiple end user devices. As referred hereinafter, end user devices can be any electronic device capable of connecting to a network for transmitting and receiving data. Such devices can include, but are not limited to, PCs, Macs, desktop computers, laptop computers, tablet PCs, smartphones including iPhones, Android phones, Windows phones, and Blackberries, e-readers, in-car communication devices, televisions and other consumer electronic devices with sufficient network capabilities. Furthermore, the end user devices can also be referred to as terminals (i.e., "device" and "terminal" are interchangeable terminologies). For example, the end user device from which data is being transmitted or copied or cut from can be referred to as a source terminal. The end user device receiving the data and/or where the data is pasted can be referred to as a target terminal. A terminal can be both a source terminal and a target terminal in various embodiments of the disclosure. A source terminal and a target terminal can be devices belonging to the same user or different users.

As referred hereinafter, the types of data transmitted from and received by the devices/terminals and/or subject to inter-device copy-and-paste operations can include, but are not limited to, text, numeric, image, video, audio, and other types of multimedia data. The transmission of data from one terminal to one or more other terminals can be facilitated through a user account associated with a network communication application, such as an instant messaging application (IM) (e.g., WeChat and QQ by Tencent, Facebook Messenger by Facebook, and MSN Messenger by Microsoft). Depending on the type of the data being transmitted, the network communication application may support one or more of the existing messaging types including, for example, text message, Short Message Service (SMS), Multimedia Messaging Service (MMS), Video Messaging Service (VMS), etc.

The disclosed systems and methods can provide quick and intuitive ways for moving data among multiple devices. In some embodiments, data can be copied or cut from an application interface on a first device (i.e., source terminal) and saved locally in a temporary storage space, e.g., a clipboard. The source terminal can then send the saved data to a server to be made available to other devices. The server, in turn, can determine one or more potential target terminals (e.g., other devices on the network) to receive the data. This determination can be based on user account information associated with the terminals and/or the data. Having identified the target terminals, the server can send an alert the target terminals notifying them about the incoming data. The actual data can then be pushed to the one or more of the target terminals. After receiving the data, each target terminal can save the data in a local storage space, such as a clipboard. The saved data can be pasted into an application interface in response to user inputs.

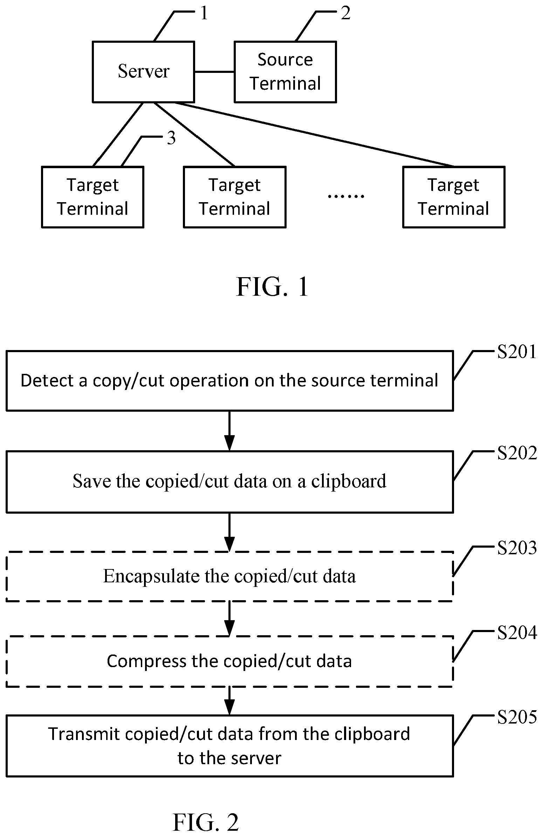

Fig. 1 illustrates an exemplary system that can facilitate quick and intuitive ways of transferring data from one device to one or more other devices. As illustrated, the system can include a service 1, source terminal 2, and one or more target terminals (collectively 3). The server 1 can be connected to the source terminal 2 and each of the target terminals 3 via a network. The server 1 can communicate with different types of devices (i.e., terminals) and/or devices running different operating systems (e.g., iOS and Android). In one embodiment, the server can be a network server on a local area network (LAN) to which the source and target terminals are connected. The server 1 can also serve as a remote storage for storing data received from one or more of terminals 2, 3. In some embodiments, for example, the server 104 can be a cloud server. In addition, the server 1 can also route messages and/or data from one terminal to at least one other terminals, as will be detailed in the embodiments below.

The four terminals 2, 3 of Fig. 1 can be different types of devices and/or devices running different operating systems. In addition, the terminals 2, 3 can be devices belong to the same user. However, it should be understood that one or more of the terminals can also belong to different users. For example, the source terminal 2 can be User A's device and the three target terminal 3 can be User B's devices. In some embodiments, the target terminals can be different user's devices. Although four terminals are illustrated, it should be understood that any number of source terminals and/or target terminals can be connected to the server 1 for transmitting and receiving data from one another. It should also be understood that the features and operations described below with reference to this figure can easily be applicable to a different number of devices or network layouts without changing the basic concept of the embodiments.

Each terminal 2, 3 can have one or more applications. Each application may have one or more associated user interfaces. The one or more applications can include any application (e.g., a messaging application) for communicating with the other terminals. In one embodiment, the messaging application can be an IM application such as WeChat, QQ by Tencent, Facebook Messenger by Facebook, and MSN Messenger by Microsoft. The messaging application may require a user account for a user to send and receive messages and/or other data. The user account can be an account dedicated for the particular application. The account information associated with this user account (or other types of account) can be used for identifying the source terminal and/or one or more corresponding target terminals during a data transfer, as will be discussed in detail in the embodiments below. The application can allow the user to remain logged in even when the application is not in an active mode (e.g., when the application is running in the background). This allows the user to receive incoming messages/alerts/data when he is using other applications on the device or even when the device is in an idle and/or sleep mode.

At least some of the one or more applications on the source terminal can include a copy and/or cut (or similar) options in their user interfaces to allow data in the application to be saved in a local storage, e.g., a clipboard, for future use, which can include being pasted into another application locally or on another device.

At least some of the one or more applications on the target terminals can include a paste (or similar) option in their user interfaces to allow data received from the server and/or other terminals to be pasted into the application. In some embodiments, the received data can be first saved in a local storage, e.g., a clipboard, before the data is pasted or subject to other usages.

The network connecting the server 1, source terminal 2, and target terminals 3 can be any wireless or wired networks, including but not limited to the Internet, LAN, wide area network (WAN), cellular network, Wi-Fi network, virtual private network (VPN), and General Packet Radio Service (GPRS) network. The network can be used for routing information and data among the terminals and the server.

In some embodiments, the server 1 and the source terminal 2 can be the same device. In other words, all the functions of the server, as described in the embodiments below can be performed by the source terminal such that the source terminal may send copied/cut data directly to one or more target terminals.

In operation, data can be transferred from the source terminal to one or more of the target terminals in simple and intuitive ways that can be a significant improvement in user-friendliness over conventional mechanisms, such as those described in the Background section above. In particular, the user can perform an inter-device copy-and-paste operation to transfer data from one device to one or more other devices. This operation can be easily adapted by the user. The data transfer among the devices can be seamless and instantaneous.

Figs. 2, 3, and 4 illustrates exemplary steps performed at the source terminal 2, server, 1, and one or more of the target terminals 3, respectively, during the inter-device copy-and-paste operation, according to embodiments of the disclosure.

Fig. 2 illustrates exemplary steps performed on the source terminal. First, a copy/cut operation performed by a user can be detected on the source terminal. (S201) The copy/cut operation can be similar to conventional copy/cut operations. It can involve the user selecting certain data from an application interface and then the copy/cut option from a menu (or via other suitable means such as using a short key or gesture). The data subject to the copy or cut operation can be any data from the application interface and of any type. For example, the data can be a block of text from a received text message in a messaging application, contact information from an address book application, a picture from a photo album application, or a network address (e.g., a uniform resource locator (URL)) from a web browser application. The data can be user-entered or preexisting on the source terminal.

In response to the copy/cut operation, the copied/cut data can be saved in a local storage space such as a clipboard. (S202) The clipboard can be similar to the ones used in conventional copy-and-paste operations performed locally on the same device. In some embodiments, the clipboard can be a temporary data buffer that can be accessed by some or all programs on the terminal via, for example, defined programming interfaces. The clipboard can be implemented in software and designed to store data in various formats, such as but not limited to plain text, HyperText Markup Language (HTML), Rich Text Format (RTF), spreadsheet, and other types of database. In some embodiments, the clipboard can be associated with a user interface so that it can be called up independently or within an application. The size of the clipboard can be limited artificially by the software or by the size of the physical storage space of the device. In one embodiment, if the size of the copied/cut data exceeds the size limit of the clipboard, an error message can be shown to the user, indicating that the data has not been saved to the clipboard and thus not available for any subsequent pasting operation. Although, clipboards are described in these embodiments, it should be understood that other types of temporary or long-term storage space, implemented in software, hardware, or a combination of both, can be used as substitutes of the clipboard and perform the same functions in other embodiments.

The copied/cut data can be available for pasting on the same terminal. Additionally or alternatively, in the embodiments of the disclosures, this data can also be made available to be pasted on other terminals. In some embodiments, an inter-device copy (or cut)-and-paste operation can be initiated whenever a copy/cut operation is detected on the source terminal. In some other embodiments, an inter-device copy-and-paste operation can be initiated by the user selecting an option (e.g., data sharing option) in an application and/or from a user interface (e.g., messaging applications such as QQ or WeChat).

In some embodiments, before the copied/cut data can be made available to other terminals, the data can be subject to additional processing to make the transfer more efficient. Each of these processes can be take place before or after the copied/cut data is saved on the clipboard.

For example, in one embodiment, an encapsulation process can be performed to encapsulate the data according to a predetermined data format. (S203) The data format can be a format mutually-agreed upon by the source terminal and the one or more target terminals. The format can be an existing data format or a format customized for the purpose of implementing the inter-device copy-and-paste operations of the embodiments. The format can be negotiated by the source terminal and the one or more target terminals at any time, but preferable prior to transmitting the data from the source terminal. The mutually-agreed data format can ensure a successful transmission of the data among the terminals and the server by requiring that the various terminals and server to transmit and receive data in the same format.

Table 1 illustrates an exemplary data format of the encapsulated data.

**Table 1 :**

| | | |
|---|---|---|
| Header | Element 1 | Element 2 |

In this embodiment, the data format includes a header portion and an element portion of each data packet (or other data unit). The header portion can include, for example, a descriptor describing the one or more element(s) in the data packet. The header can also specify the exact location (e.g., start and end delimiters) of each element within the data packet. In addition, the header information may include other information such as the size or length of each element. The element portion can include one or more elements, each containing a piece of the actual copy of copied/cut data. The data in the elements can be of the same type or of different types. For example, Element 1 may include text data. Element 2 may include image data. Although only two elements are shown in the format of Table 1, it should be understood that the number of elements in the format may vary so long as the same format is accepted by both the source terminal and the one or more target terminals.

Referring again to Fig. 2, additionally or alternatively, the copied/cut data can be compressed before being transmitted from the source server. (S204) In one embodiment, the source server can determine the size of the copied/cut data. If the size exceeds a predetermined threshold (e.g., 3000 characters or 50 megabytes), the data can be compressed using any suitable existing data compression mechanisms. By compressing the copied/cut data, the storage space required for storing the data can be reduced on both the source terminal and the server. It can also improve the overall efficiency of the data transfer process because a smaller amount of data is to be transferred. In one embodiment, the compression process can be a part of the data encapsulation process discussed above in S203. Alternatively, the compression can be done separately from the encapsulation process. Although Fig. 2 illustrates the encapsulation step taken place before the compression step, the order of these two steps can be reversed.

In addition to the data encapsulation and data compression processes described above, the copied/cut data can also be subject to other processes such as encoding or encryption processes (not shown in Fig. 2). These processes may provide security measures for the data transfer. It should be understood that both the data encapsulation process (S203), the data compression process (S204), and any additional processes can be optional (as indicated by the dotted lines in Fig. 2). It should also be understood that each one of these processes can take place before or after the data is saved on the clipboard.

Finally, after the data has gone through the necessary processes, if any, the data is read from the clipboard and transmitted from the source terminal to the server. (S205) In some embodiments, the data can be transmitted via an application (e.g., a messaging application such as QQ or WeChat by Tencent) on the source terminal. In these embodiments, the user account information associated with the application can be transmitted with the data to the server.

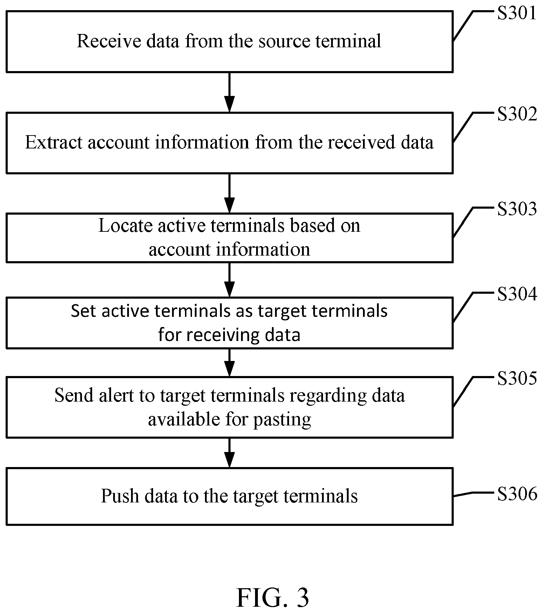

The server can be in communication with the source terminal and one or more of the target terminals over a network. In various embodiments of the disclosures, the server can serve as a routing point for routing the data copied/cut from the source terminal to one or more target terminal. Fig. 3 illustrates exemplary steps performed by the server in facilitating an inter-device data transfer (e.g., copy/cut-and-paste operation), according to embodiments of the disclosure.

In S301, the server can receive the data transmitted from the source terminal. Before forwarding the data to any target terminals, the server can first determine which one or more target terminals are the intended targets of this data. In one embodiment, this determination can be based on user account information received along with the copied/cut data from the source server. The server can extract the user account information. (S302). The user account information can be of an account of the user log onto the source terminal, or a user account associated with a particular application in which the user has signed on when the data was copied/cut on the source terminal. For example, it can be a user's login information for a messaging application such as QQ or WeChat, which may be used for transmitting the data from the source terminal to the server. In various embodiments, the account information can include, but is not limited to, username, account number, and digital signature.

In one embodiment, the account information can be associated to a different user's account. For example, if User A is communicating with User B using an IM application on User A's device, User B's account information can be attached to the copied/cut data to be used as an identifier of the intended target terminals of the data.

Referring again to Fig. 3, after the server extracts the user account information, the server can use the account information to identify one or more intended target terminal for the data. In this embodiment, for example, the server can search for all terminals (other than the source terminal) at which the same user has logged into his account. (S303). This can occur when, for example, a user is logged into his account on more than one device at the same time. For example, after receiving copied/cut data from a user's smartphone, the server can identify, based on the user's account information, the same user's laptop and tablet PC as other devices, on which user has logged into his account of the same application. These terminals can be collectively referred to as the active terminals. Once the active terminals are identified, the server can set them as target terminals for receiving the data from the source terminal. (S304)

In other embodiments, the server can identify intended target terminals by other means. For example, a mapping of the various source terminals and their corresponding target terminals can be compiled and stored on the server before any data is transmitted among the terminals. This can allow the server to look up target terminals based on an identifier of the source terminal. The identifier can be obtained from any network communications originated from the source terminal. For example, the identifier can be transmitted along with the copied/cut data. The identifier can be an IP address (or other types of network address), device name, or user account associated with the source terminal. The mapping of the source terminals and target terminals can be stored in any suitable format such as a table or a list. In one embodiment, the table or list can be created, updated, and/or customized by the users associated with the terminals. For example, the user can identify all of his devices as the source and target terminals with respect to each other.

In some embodiments, the user can further authorize the server to forward data copied/cut from one of his devices to another user's account/devices. This can be done by listing the other user's account information or device identifier among the identifiers of the target terminals for receiving data from one of the user's own account or device. In other embodiments, the server can track the target terminals that have been previously linked to (e.g., received data from) a particular source terminal, and assume that the same target terminals can be entitled to receive additional data from the source terminal.

After one or more target terminals are identified, the server can send an alert to each of the target terminals to notify them of incoming data. (S305) The alert can identify the source of the data (e.g., the source terminal from which the data was copied/cut). Additionally or alternatively, the alert can instruct the target terminals that the data, once received, will be automatically saved on a clipboard (or any other storage space) on the target terminals for later use. In various embodiments, the alert can be delivered in any format. For example, it can be displayed in a popup window or within an application interface of any application (e.g., QQ or WeChat), or converted into a voice format to be played on the target terminals.

Finally, the server can push the data to the target terminals after sending the alert. (S306) Alternatively, the data can be delivered attached to the alert. This data push can be done in real time as soon as the server receives the copied/cut data from the source terminal and identifies the target terminals. Alternatively, data can be pushed to the target terminals based on a predetermined schedule (e.g., every 5 minutes), which can be set by the user of each target terminal.

As mentioned previously, in some embodiments, some or all of the above-described functions of the server can be performed at the source terminal. For example, the source terminal can store a list of its corresponding target terminals or dynamically determine the target terminals based on user account information. The source terminal can also sent out alert and the copied/cut data directly to each of the target terminals. By having the source terminal performed all the functions of the server, a direct inter-device copy-and-paste operation can be performed without the need of a server, such as the one illustrated in Fig. 1.

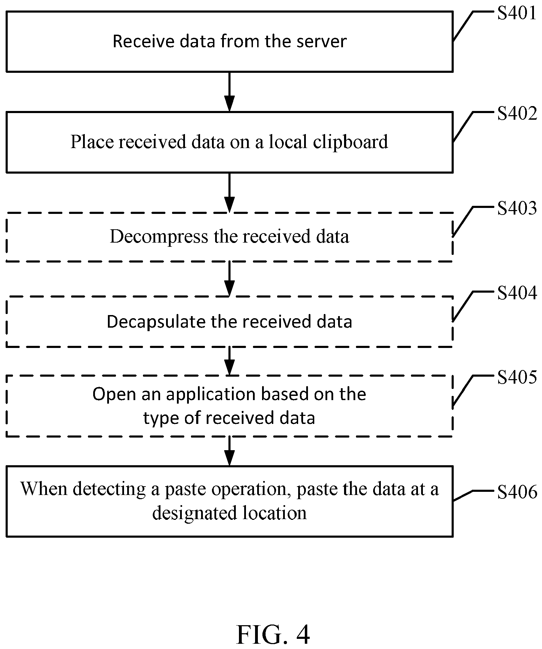

Fig. 4 illustrates the exemplary steps performed on a target terminal in an inter-device copy-and-paste operation, according to embodiments of the disclosure. Although the steps illustrated in Fig. 4 are described as being performed on a single target terminal, it should be understood that the same process can be carried out on each of the target terminals that received the data from the server.

When the data is received at the target terminal (S401), it can be saved on a clipboard locally at the target terminal. (S402) The clipboard on the target terminal can be similar to the one on the source terminal. The target can also detect if the data has been subject to any processing on the source terminal. If, for example, the data was encapsulated on the source terminal, a decapsulating step can be carried out to extract the data from the data packet. (S403) In one embodiment where the encapsulated data is in the format shown in Table 1, this process can involve striping the header and using information stored in the header to locate and retrieve the data stored in the element portion of the data packet.

If the data has been compressed on the source server, a decompression step can be performed to restore the data to a form suitable for use on the target terminal. (S404) Similarly, the data can be decoded or decrypted if it has been encoded or encrypted, respectively, on the source terminal. Each of these reversing processes can be carried out either before or after the data is saved on the clipboard.

When a paste command is detected on the target terminal, the data saved on the clipboard can be pasted into an application and/or user interface at the target terminal. (S406) The paste command can be entered by, for example, a user selecting the paste option from a menu or using a short key preprogrammed in the application. In addition, a location within an interface of the application can be specified by the user for the pasted data. This can be done by having a cursor moved to the specified location and enter the paste command.

In one embodiment, the type of the data can be used for determining the application interface into which the data is to be pasted. The target terminal can then call up the application interface for the pasting operation. (S405) For example, if the data is video data, an application with video playback capability, such as a video sharing application, can be opened to receive the video data. As another example, if the data is determined to be a sound clip, a voice-enabled instant messaging application can be opened to play the sound clip. As yet another example, if the data is numeric data such as a phone number, a phone book application can be opened to add the phone number. The various data types can be mapped to the different applications either manually by a user or by default settings on each target terminal. When there are multiple applications at the target terminal that can be used to open the data, the user can be provided with the option of selecting one of them from, for example, a list of suitable applications. This process of determining an appropriate application or applications and calling up the application can further improve the user experience of the inter-device copy-and-paste operation by eliminating manual steps in the process. In some embodiments, once the application is open, a default location within the application interface can be designated by a cursor for the pasted data. Alternatively, the user can manually pick a location to paste the data.

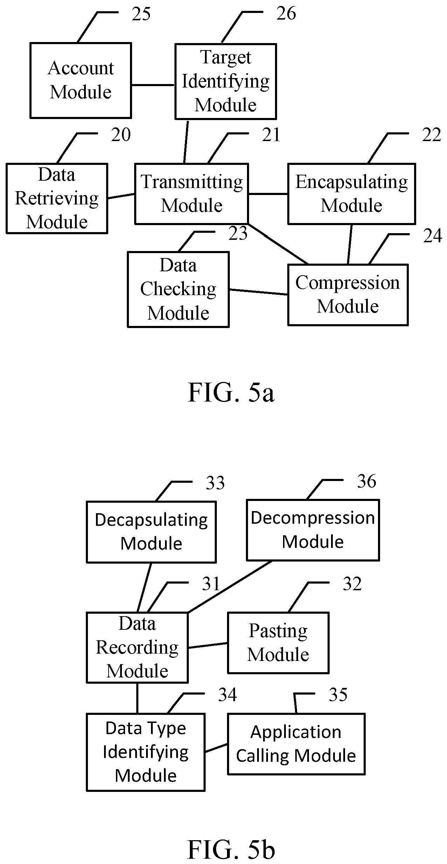

The communication between the source terminal, one or more target terminals, and the server and the data processing carried out on each of these systems can be implemented using various combinations of software, firmware, and hardware technologies. Each of these systems may include one or more modules for facilitating various tasks in the inter-device copy-and-paste operations disclosed above. Figs. 5a and 5b illustrate a number of exemplary modules in an exemplary source terminal and exemplary target terminal, respectively. In some embodiments, these modules can be implemented mostly in software.

Fig. 5a is a block diagram illustrating the exemplary modules of a source terminal. The source terminal can be any device that supports various embodiments of the disclosed inter-device copy-and-paste operations. As illustrated, the modules can include one or more of a data retrieving module 20, transmitting module 21, encapsulating module 22, data checking module 23, compression module 24, account module 25, and target identifying module 26.

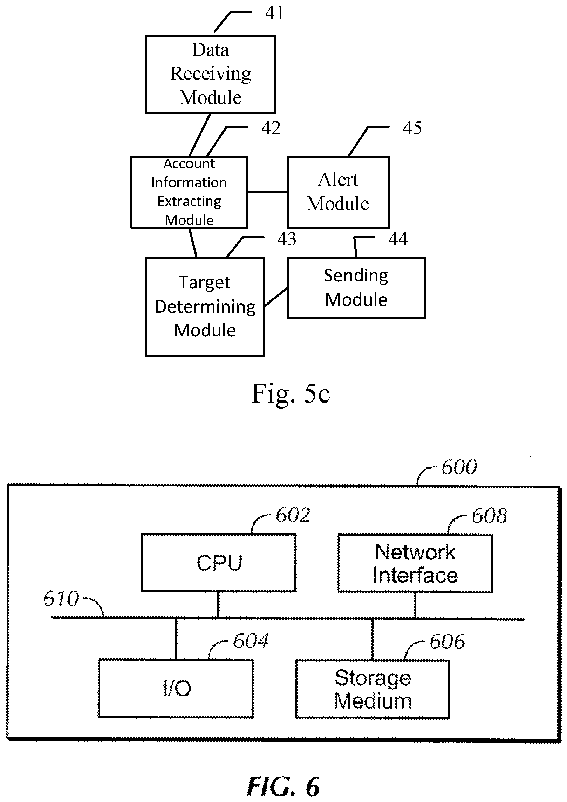

The data retrieving module 20 can retrieve data saved on the clipboard as a result of a copy or cut operation detected on the source terminal. The transmitting module 21 can transmit the data retrieved by the data retrieving module to the server to be pushed to one or more target terminals. In the embodiment illustrated in Fig. 5, the source terminal can also include an encapsulating module 22. The encapsulating module 22 can encapsulate the collected data according to a specific data format before the data is transmitted by the transmitting module 21, as described in S203 of Fig. 2.

In addition, the source terminal can also include a data checking module 23 that can check the copied/cut data for various purposes. For example, the data checking module 23 can check the size of the data to determine whether it is within the limit, if any, allowed for the copy-and-paste operation. If the data exceeds the limit, it can be rejected or compressed to satisfy the size requirement. To that end, the source terminal can also include a compression module 24. When the data checking module 23 detects an over-the-limit data size, the compression module can compress the data so that the data can be transmitted over the network and pushed to one or more target terminals. In some embodiments, the compression module 24 can compress all outgoing data, regardless of whether the data size is over or under any limit, to enable faster data transmission in the disclosed inter-device copy-and-paste operations. The compressing of the data can occur before the data is encapsulated by the encapsulating module 22. In some embodiments, each of the encapsulating module 22, data checking module 23, and the compression module 24 can be optional. In the embodiments where the inter-terminal copy-paste operation is performed without involving a server, the source terminal can also include an account module 25 that can determine user account information of an application on the source terminal. The source terminal can also include a target identifying module 26 that can identify, based on the user account information, at least one other terminal as the target terminal for receiving the data.

Fig. 5b is a block diagram illustrating the exemplary modules of a target terminal supporting the disclosed inter-device copy-and-paste operations. In this embodiment, the modules can include a data recording module 31, pasting module 32, decapsulating module 33, data type identification module 34, application calling module 35, and a decompression module 36.

The data recording module 31 can record data received from the server onto a clipboard on the target terminal. The pasting module 32 can paste the data saved on the clipboard into an application interface on the target terminal in response to a user input. If the received data is encapsulated, the decapsulating module 33 can decapsulate the encapsulated data to extract the data for pasting or other uses. The decapsulating module 33 can work with the same data format used by the encapsulating module on the source terminal. The decompression module 36 can decompressed the received data if the data has been compressed.

In the embodiment illustrated in Fig. 5b, the data type identifying module 34 can identify the type of data being pushed from the server. The application calling module 35 can call up an application based on the data type identified by the data type identifying module 34, as described in, for example, S405 of Fig. 4. The application can be one that is suitable for accepting and/or displaying the data of the identified type. Both the identifying of the data type and the calling of the application can occur before the data can be pasted into the application interface or put to other uses. In some embodiments, any of the decapsulating module 33, data type identifying module 34, the application calling module 35, and decompression module 36 can be optional.

Although Figs. 5a and 5b illustrate the various modules of a source terminal and target terminal, respectively, it should be understood that the same terminal can serve both as a source terminal and a target terminal. That is, data can be copied/cut from the terminal and made available to the other terminals for pasting over a network. The same terminal can also receive data copied/cut from the other terminals and allow the received data to be pasted into one or more of its applications. Accordingly, in the embodiments where a terminal can be both the source and target terminals, it can include some or all of the modules illustrated in both Figs. 5a and 5b.

Fig. 5c is a block diagram illustrating the exemplary modules of a server capable of facilitating the disclosed inter-device copy-and-paste operations. In this embodiment, the modules can include one or more of a data receiving module 41, account information extracting module 42, target determining module 43, sending module 44, and alert module 45. The data receiving module 41 can receive data from at least one of the terminals (e.g., a source terminal). The account information extracting module 42 can extract account information from the received data. The target determining module 43 can determine, based on the extracted account information, at least one target terminal. The sending module 44 can send the received data to the target terminal. In some embodiments, the server can also include an alert module 45 that can send an alert to the target terminal regarding the data to be sent to the target terminal.

In some embodiments, one or more of these modules on the source terminal and target terminal can be stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer-readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The non-transitory computer readable storage medium can be part of a computing system serving as the server or the terminals. Fig. 6 illustrates exemplary common components of one such computing system. As illustrated, the system 600 can include a central processing unit (CPU) 602, I/O components 604 including, but not limited to one or more of display, keypad, touch screen, speaker, and microphone, storage medium 606 such as the ones listed in the last paragraph, and network interface 608, all of which can be connected to each other via a system bus 610. The storage medium 606 can include the modules of Figs. 5a and 5b depending on whether the system is a source terminal or a target terminal or both.

By enabling inter-device copy-and-paste operations among multiple devices, the embodiments of the disclosure can provide faster and more intuitive data sharing/transferring processes among the multiple devices than any existing mechanisms. For example, if a user wishes to copy contact information from his PC to his smartphone, he can simply highlight the contact information and press Ctrl-C on his PC keyboard. With him logged on to his QQ account on both the PC and the smartphone, the copied information can be seamlessly transmitted to the smartphone. An alert can pop up instantly on the smartphone notifying of the arrival of the contact information. A contact application can automatically open up on the smartphone based on the data type associated with the contact information. The user can simply select paste and the contact information will be added to the contact application.

Although embodiments of this disclosure have been fully described with reference to the accompanying drawings, it is to be noted that various changes and modifications will become apparent to those skilled in the art. Such changes and modifications are to be understood as being included within the scope of embodiments of this disclosure as defined by the appended claims.

## Claims

1. A source terminal connected to at least one other terminal, the source terminal comprising:
a data copy module that copies data from an application interface associated with an application to a clipboard on the source terminal,
a data retrieving module (20) that retrieves the data saved on the clipboard of the source terminal,
an account module (25) that determines user account information of the application on the source terminal,
a target identifying module (26) that identifies, based on the user account information, at least one other terminal as a target terminal to receive the retrieved data, wherein the target identifying module identifying the at least one other terminal to be the target terminal comprises determining whether the user account information matches account information associated with the application on at least one other terminal, and
a transmitting module (21) that transmits the retrieved data to the identified target terminal.

2. The source terminal of claim 1, wherein the user account information indicates a user signed-on status of the application on the source terminal.

3. The source terminal of claim 1, wherein identifying the target terminal comprises determining whether the application on the target terminal has a user signed-on status based on the user account information.

4. The source terminal of claim 1, comprising a storage module that stores an identifier of the at least one target terminal corresponding to the source terminal.

5. The source terminal of claim 1, comprising an alert module that alerts the identified target terminal of the transmission of the retrieved data.

6. The source terminal of claim 1, comprising:
a data encapsulating module that encapsulates data for transmitting to the identified terminal.

7. The source terminal of claim 6, wherein the data encapsulating module encapsulates the data using a data format agreed upon by the source terminal and the identified target terminal.

8. The source terminal of claim 7, wherein the data format comprises an element comprising data to be copied at the target terminal and a header comprising descriptive information regarding the element.

9. The source terminal of claim 8, wherein the descriptive information comprising at least one of the size and length of the element.

10. The source terminal of claim 1, comprising:
a data compression module that compresses data for transmitting to the identified target terminal.

11. The source terminal of claim 1, comprising a data checking module that checks a size of the data to be transmitted.

12. The source terminal of claim 11, wherein the data is compressed before being transmitted to the target terminal if the size of the data exceeds a predetermined threshold.

13. A method performed by a source terminal, comprising:
copying data from an application interface associated with an application to a clipboard on the source terminal,
retrieving the data saved on the clipboard of the source terminal,
determining user account information of the application on the source terminal,
identifying, based on the user account information, at least one other terminal as a target terminal to receive the retrieved data, wherein the identifying the at least one other terminal to be the target terminal comprises determining whether the user account information matches account information associated with the application on at least one other terminal, and
transmitting the retrieved data to the identified target terminal.

## Patentansprüche

1. Quellenterminal, das mit zumindest einem anderen Terminal verbunden ist, wobei das Quellenterminal umfasst:
ein Datenkopiermodul, das Daten von einer Anwendungsschnittstelle, die mit einer Anwendung assoziiert ist, zu einem Clipboard auf dem Quellenterminal kopiert,
ein Datenerhaltemodul (20), das die auf dem Clipboard des Quellenterminals gespeicherten Daten erhält,
ein Account-Modul (25), das eine Benutzer-Account-Information der Anwendung auf dem Quellenterminal bestimmt,
ein Zielidentifizierungsmodul (26), das, basierend auf der Benutzer-Account-Information, zumindest ein anderes Terminal als ein Zielterminal zum Empfangen der erhaltenen Daten identifiziert, wobei das Identifizieren des zumindest einen anderen Terminals als das Zielterminal durch das Zielidentifizierungsmodul ein Bestimmen umfasst, ob die Benutzer-Account-Information mit einer Account-Information, die mit der Anwendung auf dem zumindest einen anderen Terminal assoziiert ist, übereinstimmt, und
ein Übertragungsmodul (21), das die erhaltenen Daten zu dem identifizierten Zielterminal überträgt.

2. Quellenterminal nach Anspruch 1, wobei die Benutzer-Account-Information einen Benutzer-Angemeldet-Status der Anwendung auf dem Quellenterminal angibt.

3. Quellenterminal nach Anspruch 1, wobei das Identifizieren des Zielterminals ein Bestimmen, ob die Anwendung auf dem Zielterminal einen Benutzer-Angemeldet-Status aufweist, basierend auf der Benutzer-Account-Information umfasst.

4. Quellenterminal nach Anspruch 1, umfassend ein Speichermodul, das einen Identifizierer des zumindest einen zu dem Quellenterminal zugehörigen Zielterminals speichert.

5. Quellenterminal nach Anspruch 1, umfassend ein Benachrichtigungsmodul, das das identifizierte Zielterminal über die Übertragung der erhaltenen Daten benachrichtigt.

6. Quellenterminal nach Anspruch 1, umfassend:
ein Datenkapselungsmodul, das Daten zum Übertragen zu dem identifizierten Terminal kapselt.

7. Quellenterminal nach Anspruch 6, wobei das Datenkapselungsmodul die Daten unter Verwendung eines Datenformats kapselt, auf das sich das Quellenterminal und das identifizierte Zielterminal geeinigt haben.

8. Quellenterminal nach Anspruch 7, wobei das Datenformat ein Element umfasst, das an das Zielterminal zu kopierende Daten sowie einen Header, der deskriptive Informationen in Bezug auf das Element umfasst, umfasst.

9. Quellenterminal nach Anspruch 8, wobei die deskriptive Information zumindest eines der Größe und Länge des Elements umfasst.

10. Quellenterminal nach Anspruch 1, umfassend:
ein Datenkompressionsmodul, das Daten zum Übertragen zu dem identifizierten Zielterminal komprimiert.

11. Quellenterminal nach Anspruch 1, umfassend ein Datenprüfmodul, das eine Größe der zu übertragenden Daten prüft.

12. Quellenterminal nach Anspruch 11, wobei die Daten komprimiert werden, bevor sie zu dem Zielterminal übertragen werden, falls die Größe der Daten einen bestimmten Schwellenwert überschreitet.

13. Verfahren, das durch ein Quellenterminal ausgeführt wird, umfassend:
Kopieren von Daten von einer Anwendungsschnittstelle, die mit einer Anwendung assoziiert ist, zu einem Clipboard auf dem Quellenterminal,
Erhalten der auf dem Clipboard des Quellenterminals gespeicherten Daten,
Bestimmen von Benutzer-Account-Informationen der Anwendung auf dem Quellenterminal,
Identifizieren, basierend auf der Benutzer-Account-Information, zumindest eines anderen Terminals als ein Zielterminal zum Empfangen der erhaltenen Daten, wobei das Identifizieren des zumindest einen anderen Terminals als das Zielterminal ein Bestimmen umfasst, ob die Benutzer-Account-Information mit einer Account-Information, die mit der Anwendung auf dem zumindest einen anderen Terminal assoziiert ist, übereinstimmt, und
Übertragen der erhaltenen Daten zu dem identifizierten Zielterminal.

## Revendications

1. Terminal source connecté à au moins un autre terminal, le terminal source comprenant:
un module de copie de données qui copie des données à partir d'une interface d'application associée à une application, vers un presse-papier sur le terminal source,
un module de récupération de données (20) qui récupère les données sauvegardées sur le presse-papier du terminal source,
un module de compte (25) qui détermine une information de compte d'utilisateur de l'application sur le terminal source,
un module d'identification de cible (26) qui identifie, sur la base de ladite information de compte d'utilisateur, au moins un autre terminal en tant que terminal cible pour recevoir les données récupérées, dans lequel l'identification, par le module d'identification de cible, dudit au moins un autre terminal en tant que terminal cible comprend une détermination si l'information de compte d'utilisateur est conforme à une information de compte qui est associée à l'application sur ledit au moins un autre terminal, et
un module de transmission (21) qui transmet les données récupérées au terminal cible identifié.

2. Terminal source selon la revendication 1, dans lequel l'information de compte d'utilisateur indique un état d'utilisateur connecté de l'application sur le terminal source.

3. Terminal source selon la revendication 1, dans lequel l'identification du terminal cible comprend une détermination si l'application sur le terminal cible a un état d'utilisateur connecté, sur la base de l'information de compte d'utilisateur.

4. Terminal source selon la revendication 1, comprenant un module de stockage qui stocke un identifiant dudit au moins un terminal cible correspondant au terminal source.

5. Terminal source selon la revendication 1, comprenant un module d'avertissement qui avertit le terminal cible identifié de la transmission des données récupérées.

6. Terminal source selon la revendication 1, comprenant:
un module d'encapsulation de données qui encapsule des données pour la transmission au terminal identifié.

7. Terminal source selon la revendication 6, dans lequel le module d'encapsulation de données encapsule les données en utilisant un format de données sur lequel le terminal source et le terminal cible identifié se sont mis d'accord.

8. Terminal source selon la revendication 7, dans lequel le format de données comprend un élément comprenant des données à copier au niveau du terminal cible ainsi qu'un en-tête comprenant des informations descriptives concernant l'élément.

9. Terminal source selon la revendication 8, dans lequel l'information descriptive comprend au moins l'une parmi la taille et la longueur de l'élément.

10. Terminal source selon la revendication 1, comprenant:
un module de compression de données qui compresse des données pour la transmission au terminal cible identifié.

11. Terminal source selon la revendication 1, comprenant un module de vérification de données qui vérifie une taille des données à transmettre.

12. Terminal source selon la revendication 11, dans lequel les données sont compressées avant d'être transmises au terminal cible si la taille des données dépasse un seuil prédéterminé.

13. Procédé mis en oeuvre par un terminal source, comprenant:
copier des données à partir d'une interface d'application associée à une application, vers un presse-papier sur le terminal source,
récupérer les données sauvegardées sur le presse-papier du terminal source,
déterminer des informations de compte d'utilisateur de l'application sur le terminal source,
identifier, sur la base de l'information de compte d'utilisateur, au moins un autre terminal en tant que terminal cible pour recevoir les données récupérées, dans lequel l'identification dudit au moins un autre terminal en tant que terminal cible comprend une détermination si l'information de compte d'utilisateur est conforme à une information de compte qui est associée à l'application sur ledit au moins un autre terminal, et
transmettre les données récupérées au terminal cible identifié.
